# DEMANDE DE BREVET EUROPEEN

(11) **EP 3 640 516 A1**
(43) Date de publication de la demande: **22.04.2020**
(21) Numéro de dépôt: 19201739.0
(22) Date de dépôt: 07.10.2019
(51) Int. Cl.: F16L 37/088

(54) **DISPOSITIF DE RACCORDEMENT RAPIDE**

(30) Priorité: 19.10.2018 FR 1871222
(71) Demandeur: AKWEL, 01410 Champfromier (FR)
(72) Inventeur: DREUX, Jérémy, 84570 MALLEMORT DU COMTAT (FR); HERAUD, Fabien, 13160 CHATEAURENARD (FR)

(57) **Abrégé**

Le dispositif (10) de raccordement rapide pour l'assemblage de premier et deuxième éléments de transport fluidique comprend un raccord femelle (12) et un raccord mâle à bague de verrouillage (20) configuré pour coopérer avec le raccord femelle (12) et pour immobiliser axialement et en rotation relativement le premier élément avec le raccord femelle (12). Selon l'invention, le raccord mâle (20) et le raccord femelle (12) comprennent respectivement des premier (50) et deuxième (60) organes complémentaires de positionnement configurés pour définir une pluralité de positions discrètes prédéfinies d'assemblage des deux raccords mâle (20) et femelle (12), réparties angulairement autour de l'axe principal, de telle sorte que dans l'une quelconque de ces positions angulaires, les deux raccords (20, 12) sont immobilisés en rotation relativement l'un par rapport à l'autre.

## Description

### Domaine technique.

La présente invention concerne un dispositif de raccordement rapide pour transfert de fluide dans un circuit de transport de fluide tel que l'air ou l'eau. Elle concerne plus particulièrement mais non exclusivement un dispositif de raccordement rapide pour le raccordement d'un embout mâle rigide à un tuyau femelle flexible.

D'une manière générale dans un circuit de transfert de fluide pour véhicule automobile, il est connu, pour raccorder de manière étanche un tuyau flexible à un embout mâle rigide d'utiliser un dispositif de raccordement comprenant une partie de raccord femelle à douille et une bague propre à être montée sur l'embout mâle rigide configurée pour coopérer avec la douille, par exemple par emboîtement, encliquetage ou encore soudage. Le raccord femelle comprend en outre un embout tubulaire spécialement conçu pour faciliter l'emmanchement du tuyau flexible.

De tels dispositifs de raccordement répondent généralement à un standard recommandé par l'Association Allemande de l'Industrie Automobile (en allemand pour « Verbrand der Automobilindustrie ») et sont communément désignés dans le métier par « raccord VDA ». De tels raccords rapides dits « VDA » sont utilisés par la majorité des fabricants de canalisations de transfert de fluide sur le marché de l'automobile et des camions.

Généralement, la tubulure comprend une rainure annulaire périphérique formant une gorge de verrouillage et la bague est munie d'un élément de verrouillage tel qu'un ressort métallique ou clip métallique propre à s'engager dans la gorge annulaire de la tubulure pour immobiliser la bague par rapport à la tubulure. Par ailleurs, la bague présente également de préférence dans ce type de raccord, un ou plusieurs repères d'indexation ou de codage formé par exemple par un ou plusieurs ergots en saillie, généralement deux, disposés de façon diamétralement opposés en périphérie de la bague. Ces ergots sont destinés à coopérer par exemple avec des reliefs complémentaires en creux ménagés dans le raccord femelle. Eventuellement, un tel dispositif peut aussi comporter une tubulure mâle avec des ergots directement montés sur la tubulure mâle sans le recours à une bague additionnelle.

L'invention s'applique en particulier au domaine technique du raccordement fluidique dans les circuits de refroidissement du moteur ou d'une batterie de véhicule électrique ou hybride. L'invention peut également être utilisée dans d'autres systèmes similaires contenant du fluide ou du gaz.

### Technique antérieure.

Les raccords rapides « VDA » existants sont généralement réalisés dans une matière plastique et sont utilisés pour raccorder des tuyaux en plastique ou des tuyaux souples en caoutchouc. Ils comprennent une attache métallique pour verrouiller ledit raccord sur les tuyaux et des ergots d'orientation pour l'arrêt en rotation de la partie de raccord mâle à bague de verrouillage dans une orientation prédéfinie.

On connaît déjà de la demande de brevet US 2017/0184240 une structure de raccordement destinée à raccorder une tubulure rigide et un tuyau flexible. Cette structure permet, à l'état monté, de faire communiquer fluidiquement entre eux la tubulure et le tuyau par l'intermédiaire d'un connecteur. Cette structure de raccordement comprend un boîtier ayant une première partie d'extrémité, en forme d'embout à cran sapin, configurée pour être connectée au tuyau flexible et une bague de verrouillage, reçue à l'intérieur d'une deuxième partie d'extrémité du boîtier.

La bague est pourvue à une de ses extrémités d'un évidement configuré pour recevoir selon une direction axiale un ergot complémentaire en saillie de la tubulure, fixant ainsi une orientation relative prédéfinie de la bague et de la tubulure. A l'autre de ses extrémités, la bague est soudée à l'intérieur du boîtier dans une orientation relative elle aussi prédéfinie par un couple complémentaire saillie-creux.

L'inconvénient de cet art antérieur est que l'orientation relative du tuyau et de la tubulure est prédéfinie au moment de la fabrication. Cela ne présente pas d'inconvénient lorsque l'embout à cran sapin s'étend axialement dans le prolongement de la tubulure puisque dans ce cas, le boîtier muni de son embout à cran sapin présente une symétrie de révolution. En revanche, lorsque l'embout forme un angle de déflexion par rapport à l'axe principal comme c'est le cas dans cet art antérieur, l'orientation relative de la tubulure avec l'embout à cran sapin est prédéterminée sans nécessairement permettre la prise en considération des contraintes du circuit dans lequel ils sont destinés à être installés.

Il s'avère alors nécessaire de prévoir plusieurs conformations du boîtier pour offrir plusieurs orientations relatives de la tubulure et du tuyau flexible. Ceci nécessite de prévoir plusieurs moules différents. L'invention a notamment pour but de remédier à cet inconvénient.

### Résumé de l'invention

A cet effet, l'invention a pour objet un dispositif de raccordement rapide pour transfert de fluide, du type comprenant :
un raccord femelle à douille configuré pour recevoir un embout tubulaire mâle, un raccord à bague de verrouillage configuré pour coopérer avec le raccord femelle et l'embout tubulaire mâle afin d'immobiliser axialement et en rotation relativement l'embout tubulaire mâle et le raccord femelle à douille, le raccord à bague et le raccord femelle comprennent respectivement des premier et deuxième organes complémentaires de positionnement relatifs configurés pour définir une pluralité de positions discrètes prédéfinies d'assemblage des deux raccords à bague et à douille, réparties angulairement autour de l'axe principal **caractérisé en ce que** le raccord à bague et le raccord femelle comprennent des moyens d'assemblage mutuels configurés pour immobiliser les deux raccords en rotation relativement l'un par rapport à l'autre dans l'une quelconque des positions angulaires discrètes choisie **et en ce que** les moyens d'assemblage mutuels comprennent une partie d'extrémité distale dilatable élastiquement du raccord à bague apte à être enfilée autour du raccord femelle par dilatation élastique et à venir agripper un épaulement annulaire externe formé par un rétrécissement de section du raccord femelle.

Grâce à l'invention, il est possible de choisir une position relative des deux éléments de transport fluidique au moment de l'assemblage, et non plus, comme dans l'art antérieur, au moment du moulage ou de la fabrication des pièces.

En outre, il est possible de sélectionner la position relative du raccord à bague et du raccord femelle dans un premier temps puis assembler dans un second temps en immobilisant les deux raccords dans la position relative sélectionnée grâce au moyen de dilatation élastique du raccord à bague qui vient agripper l'épaulement annulaire externe du raccord femelle. Le retour élastique de la bague en agrippant l'épaulement externe permet d'immobiliser les deux raccords dans la position sélectionnée.

Un raccordement rapide selon l'invention peut en outre comporter l'une ou plusieurs des caractéristiques suivantes.

Dans un mode de réalisation préféré de l'invention, le raccord femelle à douille comprend un corps principal de forme générale annulaire autour d'un axe principal formant la douille et un embout prolongeant la douille, de raccordement à un élément de conduite fluidique, l'épaulement externe s'étendant entre la douille et l'embout de raccordement.

Dans un mode de réalisation préféré de l'invention, le raccord femelle comprend un corps principal en forme de douille délimité axialement d'une part par une extrémité libre portant le deuxième organe de positionnement et d'autre part par l'épaulement externe, formé à distance de son extrémité libre qui forme l'un des moyens d'assemblage mutuels.

Dans un mode de réalisation particulier de l'invention, les premier et deuxième organes de positionnement coopèrent par encastrement dans chacune des positions discrètes, la configuration d'assemblage des deux raccords à bague et à douille étant propre à empêcher tout désencastrement intempestif des deux organes de positionnement.

Dans un mode de réalisation préféré, le relief circonférentiel est porté en bordure d'une extrémité libre du raccord femelle.

Dans un mode de réalisation particulier de l'invention, les premier et deuxième organes de positionnement définissent ensemble une pluralité de couples distincts ergot/rainure pour définir la pluralité de positions discrètes dans chacune desquelles au moins un ergot est apte à venir en prise avec une rainure.

Dans un mode de réalisation particulier de l'invention, l'un des premier et deuxième organes de positionnement comprend au moins un ergot de positionnement et l'autre des premier et deuxième organes de positionnement comprend un relief circonférentiel délimitant une pluralité de rainures de positionnement.

Dans un mode de réalisation particulier de l'invention, le premier organe de positionnement s'étend sur une surface interne du raccord à bague et le deuxième organe de positionnement s'étend sur une surface externe du raccord à douille, ces deux surfaces étant destinées à venir en regard l'une de l'autre, de telle sorte que le premier organe de positionnement coopère avec le deuxième organe de positionnement par encastrement radial.

Dans un mode de réalisation particulier de l'invention, la répartition angulaire est régulière.

Dans un mode de réalisation particulier de l'invention, les positions discrètes se répartissent autour de l'axe X avec un pas angulaire compris entre 5° et 90°, de préférence compris entre 10° et 20°.

Dans un mode de réalisation particulier de l'invention, les moyens d'assemblage sont du type à clipsage.

Dans un mode de réalisation particulier de l'invention, le raccord à bague comprend une partie d'extrémité distale dilatable élastiquement apte à venir être enfilée autour du raccord à douille par dilation élastique et à venir agripper un épaulement externe formé sur le raccord à douille.

Dans un mode de réalisation particulier de l'invention, le raccord à bague comprend une jupe fendue munie d'au moins un bourrelet d'encliquetage orienté vers l'intérieur de la jupe formant un des moyens d'assemblage mutuels.

Dans un mode de réalisation particulier de l'invention, le raccord à douille comprend un épaulement externe formé à distance de son extrémité libre et formant un des moyens d'assemblage mutuels.

Dans un mode de réalisation particulier de l'invention, l'embout tubulaire mâle étant du type à gorge annulaire, le dispositif comprend un élément de verrouillage agencé pour venir serrer l'embout tubulaire mâle dans la gorge annulaire au travers du raccord à bague.

Dans un mode de réalisation particulier de l'invention, le raccord à bague comprend une partie d'extrémité proximale munie de lumières symétriques et l'élément de verrouillage présente deux branches de verrouillage élastique réunies entre elles par une tête de préhension et adaptées pour être enfoncées transversalement et réversiblement à travers les deux lumières symétriques.

Dans un mode de réalisation particulier de l'invention, le raccord femelle comprend un corps principal d'axe principal X formant la douille prolongé par un embout d'axe de prolongement X1 qui forment ensemble un angle compris entre 5° et 90°.

Dans un mode de réalisation particulier de l'invention, le raccord à bague présente sur sa surface interne au moins un évidement encastré radialement vers l'extérieur propre à coopérer avec au moins un repère d'indexation formé en périphérie extérieure de l'embout tubulaire mâle pour permettre l'immobilisation en rotation du raccord à bague et de l'embout tubulaire mâle.

Dans un mode de réalisation particulier de l'invention, le dispositif comprend au moins cinq positions discrètes, de préférence au moins dix positions discrètes

Dans un mode de réalisation particulier de l'invention, le raccord femelle comprend sur sa surface interne un rétrécissement de section interne formant un épaulement configuré pour délimiter avec le raccord à bague, l'embout tubulaire mâle et la surface interne un logement de réception d'un joint torique.

### Brève description des dessins

D'autres caractéristiques et avantages de l'invention apparaîtront à la lumière de la description qui suit, faite en référence aux dessins annexes dans lesquels :
**Fig.1**

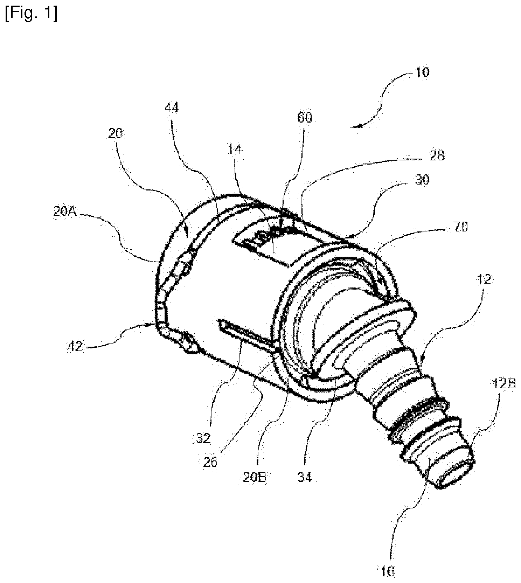

   [fig.1] représente une vue en perspective d'un dispositif de raccordement rapide selon l'invention;
**Fig.2**

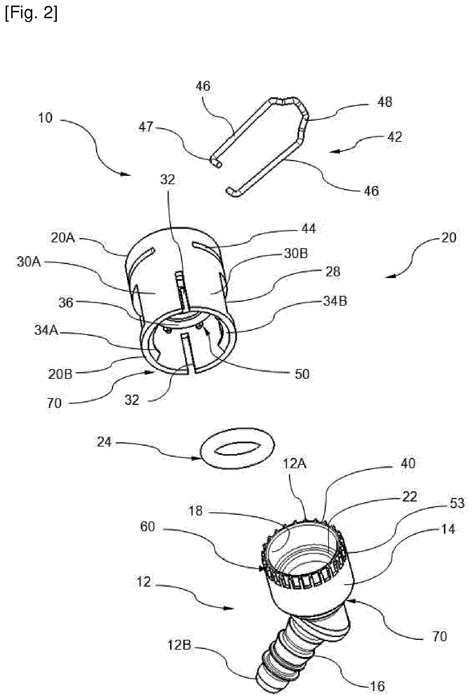

   [fig.2] représente une vue en perspective éclatée du dispositif de la figure 1 ;
**Fig.3**

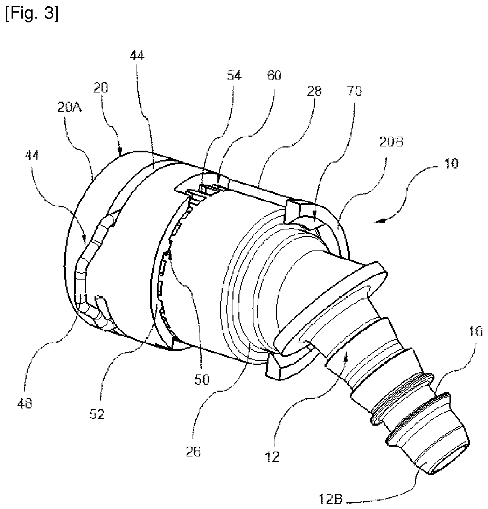

   [fig.3] représente une vue en perspective partiellement écorchée du dispositif de la figure 1 ;
**Fig.4**

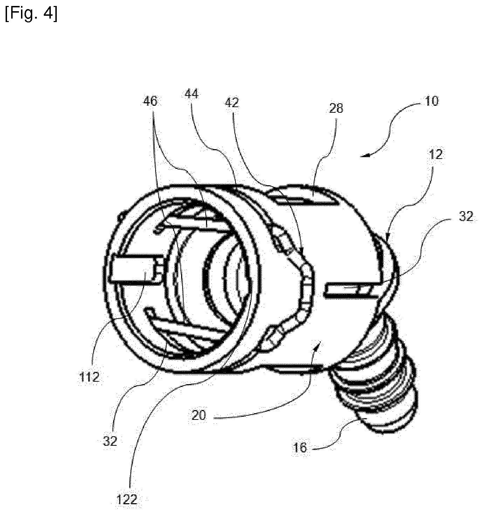

   [fig.4] représente une vue en perspective du dispositif de la figure 1 selon un autre point de vue ;
**Fig.5**

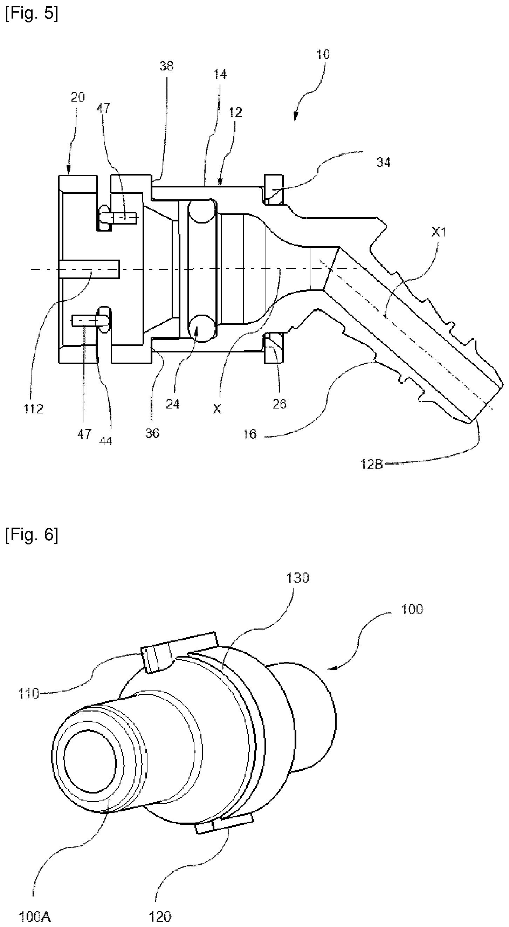

   [fig.5] représente une vue en coupe axiale du dispositif de la figure 1 ;
**Fig.6**
   [fig.6] représente une vue en perspective d'une tubulure mâle destinée à être assemblée au dispositif des figures 1 à 5;
**Fig.7**

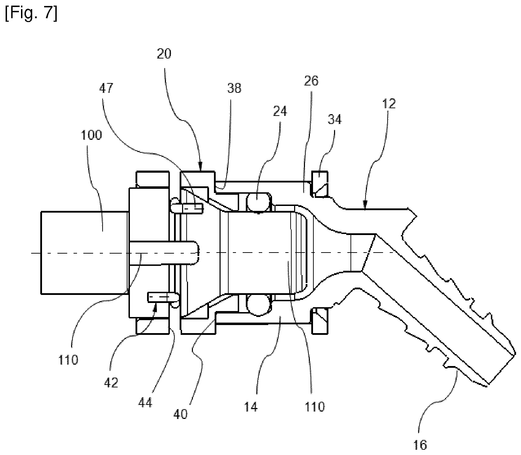

   [fig.7] représente une vue en coupe axiale du dispositif de la figure 1 assemblée avec la tubulure mâle;
**Fig.8**

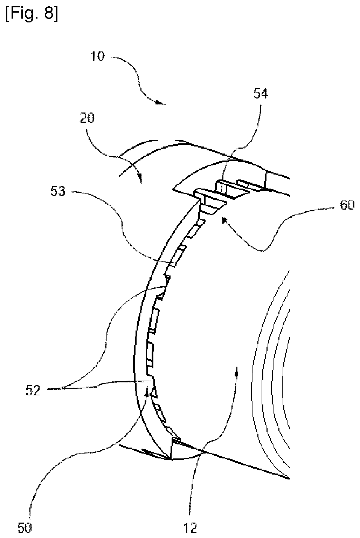

   [fig.8] représente une vue partielle à échelle agrandie des premier et deuxième organes de positionnement d'un raccord mâle et d'un raccord femelle du dispositif de la figure 1 ;
**Fig.9**

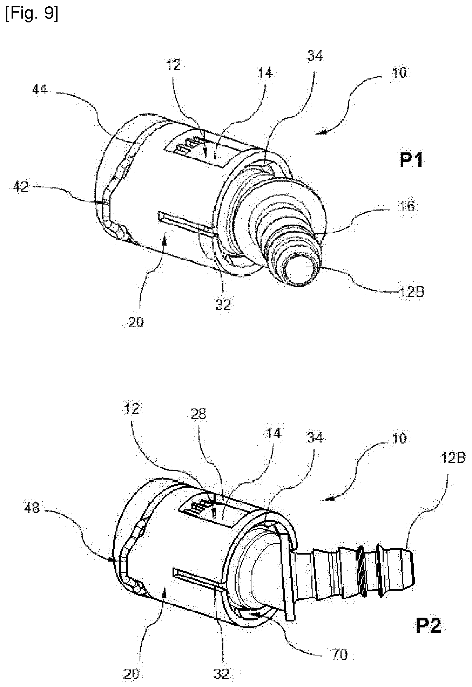

   [fig.9] illustre différentes configurations d'assemblage du dispositif de raccordement de la figure 1 ;
**Fig.10**

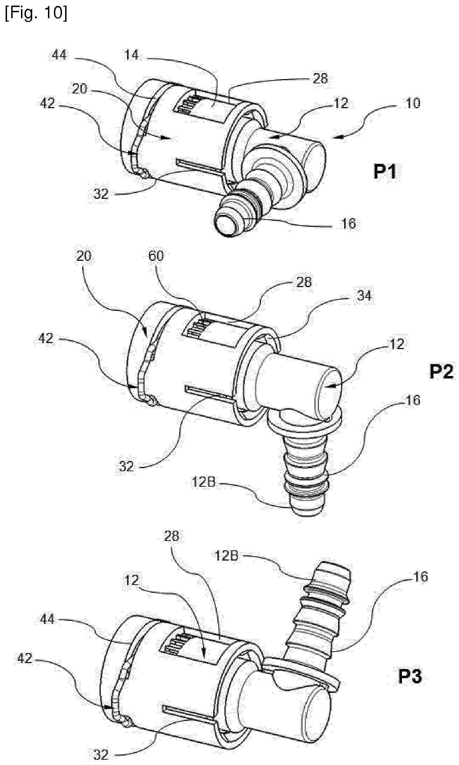

   [fig.10] illustre différentes configurations d'assemblage du dispositif selon une variante de réalisation de l'invention.

### Description des modes de réalisation

On a représenté sur **les** **figures 1 à 10** un dispositif de raccordement rapide pour l'assemblage de deux éléments de conduites de transfert fluidique selon l'invention. Ce dispositif est désigné par la référence générale 10.

Un tel dispositif de raccordement 10 peut notamment faire partie d'un circuit de transport d'un fluide, tel qu'un fluide de refroidissement d'un moteur ou d'une batterie d'un véhicule automobile. Par exemple, il est destiné à l'assemblage rapide d'un premier élément tubulaire fluidique 100 tel qu'une tubulure à gorge annulaire ou collerette représentée en détail sur **la** **figure 6** à un deuxième élément de conduite fluidique tel qu'un tuyau flexible (non représenté sur les figures) venant se raccorder par exemple par emmanchement au dispositif de raccordement 10. Le tuyau flexible est par exemple réalisé en un matériau élastomère, tel que du caoutchouc.

Conformément à l'invention, le dispositif 10 comprend un raccord femelle 12 à douille configuré à une extrémité 12A pour recevoir un premier élément de conduite fluidique mâle 100 tel que celui illustré par exemple sur **les** **figures 6** **et** **7****.** Ce raccord femelle 12 comprend un corps principal 14 de forme générale annulaire autour d'un axe principal X formant la douille 14. De préférence, à une autre extrémité 12B, le raccord femelle 12 est pourvu d'un embout 16 de raccordement à un deuxième élément de conduite fluidique tel qu'un tuyau souple (non représenté sur les figures). Dans l'exemple décrit, l'embout 16 est formé d'une partie tubulaire prolongeant le corps principal 14 du raccord femelle 12.

Dans l'exemple illustré sur **la** **figure 1****,** l'embout 16 comprend une surface externe conformée pour l'emmanchement d'un tuyau flexible (non représenté) et comprend, sur cette surface externe, des moyens de retenue axiale du tuyau flexible. Par exemple, l'embout 16 présente un relief étagé du type à cran sapin destiné à recevoir un tuyau flexible par emmanchement (non représenté).

En outre, comme cela est visible sur **les figures,** en particulier sur **la** **figure 5****,** le prolongement tubulaire 16 s'étend selon un axe X1 en formant un angle de déflexion avec l'axe X du corps principal 14. Dans cet exemple illustré sur **les** **figures 1 à 9****,** l'angle de déflexion est d'environ 45°. En variante illustrée sur **la** **figure 10****,** l'angle de déflexion peut être de 90° pour former un coude à angle droit ou prendre toute autre valeur sans sortir du cadre de l'invention. Eventuellement, l'angle peut être alors nul.

Dans l'exemple décrit, le corps principal 14 du raccord femelle 12 délimite intérieurement un logement 18 configuré pour recevoir l'extrémité 100A de la tubulure 100. Ce logement 18 communique avec un passage axial intérieur de l'embout tubulaire 16. Dans l'exemple illustré sur **la** **figure 7****,** le raccord femelle 12 comprend à sa première extrémité 12A, sur une surface interne du logement 18 un rétrécissement de section interne formant un épaulement 22 délimitant un emplacement de réception d'un joint torique 24.

De préférence, la partie tubulaire 16 suit un axe X1 de prolongement et l'axe X1 forme un angle de déflexion avec l'axe principal X, par exemple compris entre 5° et 90°. **Sur les** **figures 1 à 9****,** l'angle de déflexion est de 45°.

Conformément à l'invention, le dispositif 10 comprend encore un raccord à bague de verrouillage 20, désignée ci-après « bague » ou « raccord à bague ». La bague 20 est configurée pour coopérer avec le raccord femelle 12 afin d'immobiliser axialement et en rotation relativement la tubulure 100 et le raccord femelle 12.

Dans l'exemple illustré sur **les figures,** la bague 20 a une forme générale de manchon annulaire. La bague 20 est selon l'invention configurée pour coopérer avec le raccord femelle 12 afin d'immobiliser axialement et en rotation relativement le premier élément 100 avec le raccord femelle 12.

Dans l'exemple décrit, la bague 20 comprend une partie d'extrémité proximale 20A localisée par exemple du côté de la tubulure 100 et une partie d'extrémité distale 20B localisée par exemple du côté du raccordement au raccord femelle 12.

Conformément à l'invention, le raccord à bague 20 et le raccord femelle 12 comprennent des moyens d'assemblage mutuels 70 des deux raccords 20 et 12 relativement l'un par rapport à l'autre. De préférence, les moyens d'assemblage mutuels 70 sont du type engageables et libérables. Par exemple, les moyens 70 sont du type à clipsage ou à encliquetage.

A cet effet, de préférence, la bague 20 comprend, dans sa partie distale 20B, une portion à expansion radiale, formant dans cet exemple l'un des moyens d'assemblage mutuels 70. Cette portion comprend une jupe tubulaire 30 fendue à son extrémité distale 20B par au moins une fente axiale 32 de sorte que la jupe tubulaire 30 est dilatable élastiquement. Dans l'exemple décrit, la jupe tubulaire 30 se divise en deux portions 30A, 30B par deux fentes axiales 32. Dans l'exemple décrit, la partie d'extrémité 20B distale dilatable élastiquement est apte à venir être enfilée autour du raccord femelle 12 par dilatation élastique et à venir agripper un épaulement externe 26 formé sur le raccord femelle 12. L'épaulement externe 26 forme dans cet exemple l'autre des moyens d'assemblage mutuels 70. L'épaulement externe 26 s'étend de préférence comme cela est illustré sur **la** **figure 3** entre le corps principal 14 en forme de douille et l'embout tubulaire, en formant un rétrécissement de section annulaire du raccord femelle 12.

En outre, dans l'exemple décrit, la jupe 30 est munie d'au moins une surépaisseur interne 34 formant un bourrelet d'encliquetage 34 orienté vers l'intérieur de la jupe 30. L'intérieur de la jupe 30 délimite un volume complémentaire au volume externe de la partie d'extrémité 12A du raccord femelle 12, avec notamment deux surépaisseurs internes 34A, 34B, chaque surépaisseur étant destinée à épouser le rétrécissement de section formant l'épaulement externe 26 du raccord femelle 12. Dans cet exemple, la partie distale 20B et l'épaulement externe 26 forment les moyens d'assemblage mutuels 70.

En outre, dans l'exemple illustré, la bague 20 comprend deux ouvertures 28 ménagées en retrait du bord d'extrémité 20B de la bague 20. Ces ouvertures 28 ont pour but par exemple de faciliter le démoulage de la bague 20. Par exemple, la bague 20 est formée par moulage par injection au moyen d'une matrice de moulage (non représentée). Cette matrice de moulage possède par exemple un moule fixe, un moule mobile et un noyau coulissant pour former la partie creuse. Lors du retrait du noyau coulissant, en l'absence des ouvertures 28, les surépaisseurs 34A et 34B empêchent l'extraction du noyau. Grâce aux ouvertures 28, l'extraction du noyau s'en trouve facilitée.

Par ailleurs, de préférence, comme illustré sur **la** **figure 2****,** la bague 20 présente un épaulement intérieur 36 présentant une face radiale 38 tournée vers son extrémité distale 20B. Cet épaulement intérieur 36 se situe à peu près, dans cet exemple, à mi-longueur de la bague 20.

Ainsi, lors de l'assemblage de la bague 20 et du raccord femelle 12, cet épaulement intérieur 36 vient en appui contre un bord d'extrémité 40 du raccord femelle 12. La face radiale 38 de cet épaulement interne 36 assure en coopération avec un bord d'extrémité 40 du raccord femelle 12 l'accrochage de la bague 20 sur le raccord femelle 12 et son immobilisation axiale sur celui-ci.

Dans sa partie proximale 20A, la bague 20 est configurée pour recevoir un élément de verrouillage 42 tel qu'une broche métallique 42 agencée pour venir serrer le premier élément fluidique 100 au travers de la bague 20. A cet effet, de préférence, la partie proximale 20A est munie sur sa surface externe de fentes circonférentielles 44 opposées ou lumières symétriques 44.

La broche 42 a par exemple une forme générale de U et présente deux branches 46 sensiblement parallèles entre elles, propres à traverser la partie d'extrémité proximale 20B de la bague 20, à partir de l'extérieur, pour s'engager dans les fentes circonférentielles 44 de la bague 20.

Dans cet exemple, l'élément de verrouillage 42 se compose d'un élément en fil métallique élastiquement déformable et comprend une paire de parties branches parallèles 46 et une partie de connexion 48 reliant les extrémités supérieures des branches 46 l'une à l'autre. Dans cet exemple, l'élément de verrouillage 42 est configuré pour être retenu par la bague 20, le plan défini par les branches 46 et la partie de liaison 48 s'étendant perpendiculairement à l'axe X et les deux branches 46 étant passées et retenues par les fentes circonférentielles 44 de la bague 20 respectivement.

Par conséquent, les deux extrémités de chaque branche 46 sont retenues par les deux parties d'extrémité des fentes de retenue 44 correspondantes, respectivement, et la partie intermédiaire de chaque branche 46 s'étend à l'intérieur de l'alésage de la bague 20. Dans l'exemple illustré, chaque branche 46 comprend une extrémité courbée 47, les deux extrémités 47 étant courbées relativement dans des directions opposées. L'extrémité libre 47 de chaque branche 46 de la broche 42 est enroulée sur le diamètre extérieur de la bague 20. Ainsi, la broche 42 est dans cet exemple retenue à la manière d'une goupille fendue.

Conformément à l'invention, la bague 20 et le raccord femelle 12 comprennent respectivement des premier 50 et deuxième 60 organes complémentaires de positionnement configurés pour définir une pluralité de positions discrètes prédéfinies d'assemblage des deux raccords 20 et 12. Ces positions discrètes prédéfinies sont réparties angulairement autour de l'axe principal X, de telle sorte que dans l'une quelconque de ces positions angulaires, les deux raccords 12 et 20 sont immobilisés en rotation relativement l'un par rapport à l'autre.

Plus particulièrement, les moyens d'assemblage mutuels 70 sont configurés pour immobiliser les deux raccords 20 et 12 en rotation relativement l'un par rapport à l'autre dans l'une quelconque des positions angulaires discrètes choisie.

Ainsi, de préférence, les premier 50 et deuxième 60 organes de positionnement coopèrent par encastrement dans chacune des positions discrètes, la configuration d'assemblage mutuel des deux raccords 12 et 20 étant propre à empêcher tout désencastrement intempestif des deux organes de positionnement 50 et 60.

Dans l'exemple décrit, le raccord femelle 12 comprend un corps principal en forme de douille 14 délimité axialement d'une part par une extrémité libre portant le deuxième organe de positionnement 60 et d'autre part par l'épaulement externe 26, formé à distance de son extrémité libre qui forme l'un des moyens d'assemblage mutuels 70.

De façon préférentielle, les premier 50 et deuxième 60 organes de positionnement définissent ensemble une pluralité de couples distincts ergot 52/rainure 54 pour définir la pluralité de positions discrètes dans chacune desquelles au moins un ergot 52 est apte à venir en prise avec une rainure 54.

De préférence, l'un des premier 50 et deuxième 60 organes de positionnement comprend au moins un ergot de positionnement 52 et l'autre des premier 50 et deuxième 60 organes de positionnement comprend un relief circonférentiel 53 délimitant une pluralité de rainures 54 de positionnement.

Dans l'exemple illustré en détail sur **la** **figure 8****,** le premier organe de positionnement 50 s'étend sur une surface interne de la bague 20 et le deuxième organe de positionnement 60 s'étend sur une surface externe du raccord femelle 12, ces deux surfaces étant destinées à venir en regard l'une de l'autre après assemblage mutuel des moyens d'assemblage mutuels 70, de telle sorte que le premier organe de positionnement 50 coopère avec le deuxième organe de positionnement 60 par encastrement radial à l'intérieur de la rainure 54 sélectionnée. Dans l'exemple illustré sur **la** **figure 2****,** l'organe de positionnement 60 se présente sous forme d'un relief crénelé en bordure d'extrémité libre de la douille 14 du raccord femelle 12 qui sera décrit plus en détail ci-après.

Dans l'exemple illustré, les rainures 54 s'étendent selon leur direction longitudinale axialement. Dans l'exemple décrit, les rainures 54 sont portées sur une surface annulaire externe d'un bord d'extrémité du raccord femelle. Ces rainures 54 sont ouvertes dans la direction axiale afin de permettre un engagement axial de l'ergot de positionnement 52 porté par la surface interne de la bague 20 à l'intérieur de la rainure 54 correspondante à la position angulaire souhaitée. Dans l'exemple illustré, le relief circonférentiel 53 s'étend en bordure et les ergots de positionnement 52 sont portés par un épaulement intérieur de la bague 20.

Bien entendu, dans une variante non illustrée sur les figures, les deux surfaces peuvent s'étendre radialement ou transversalement et dans ce cas l'encastrement est axial.

Sur ces figures, le relief 53 est du type crénelé pour définir une pluralité de rainures 54. Dans l'exemple illustré, le relief 53 a un profil à créneaux rectangulaires. Bien entendu, d'autres formes peuvent convenir, tel qu'un profil à vagues, du type à dents en pointe, etc. Par ailleurs, concernant le ou les ergots 52, toutes formes peuvent convenir telles que des formes en pointeau, en goupille, en clavette, etc. En outre, la disposition du relief 53 peut être organisée, dans une variante non illustrée, selon un motif en rosace.

Il va de soi par ailleurs que le relief 53 peut être porté par le raccord à bague 20 et l'ergot 52 ou les ergots 52 par le raccord femelle 12 sans sortir pour autant du cadre de l'invention.

En outre, bien que sur **les figures,** le raccord femelle 12 et la bague 20 présentent des surfaces annulaires, il est possible d'envisager également des surfaces légèrement bombées ou de forme générale conique.

De préférence, la répartition angulaire des positions discrètes est régulière. Par exemple, les positions discrètes se répartissent autour de l'axe X avec un pas de 10° et de préférence plus généralement compris entre 5° et 45°, ou encore compris entre 5° et 40°. Le nombre de positions discrètes dépend de la valeur angulaire du pas. Bien entendu, la répartition angulaire peut être irrégulière. De préférence, les premier 50 et deuxième 60 organes complémentaires de positionnement relatifs sont configurés pour définir au moins cinq positions discrètes prédéfinies d'assemblage des deux raccords à bague 20 et à douille 12 et de préférence plus de 10.

En outre, la bague 20 présente sur sa surface interne au moins un évidement 112 ou 122 encastré radialement vers l'extérieur propre à coopérer avec au moins un repère d'indexation 110 ou de codage 120 formé en périphérie extérieure du premier élément tubulaire 100 pour permettre l'immobilisation en rotation de la bague 20 et du premier élément tubulaire 100.

Le repère d'indexation 110 a pour but de définir et verrouiller la position angulaire relative du raccord 20 et de la tubulure mâle 100 alors que le repère de codage 120 est destiné à détromper le raccordement entre deux tubulures mâles distinctes, notamment de dimension identique. En effet, si deux circuits différents disposent du même diamètre, il peut être nécessaire d'éviter une erreur de connexion. Dans ce cas, l'ergot de codage 120 de la tubulure mâle 100 ne peut s'emmancher que dans le raccord femelle 12 qui dispose de la contre-forme en creux 122 correspondante, évitant ainsi tout risque d'erreur de connexion. L'ergot d'indexation 110 et de codage 120 et les contre-formes 112 et 122 associées ont des dimensions différentes qui empêchent l'inversion de l'indexation et du codage. En variante, le raccord à bague 20 peut intégrer aucun de ces ergots ou peut intégrer l'indexation et/ou le codage. En outre, de préférence, la tubulure mâle 100 comprend une gorge annulaire 130.

On va maintenant décrire en référence **à la** **figure 9** les principaux aspects de fonctionnement du dispositif 10 selon l'invention. Dans cette variante, l'embout tubulaire 16 et la tubulure mâle 100 sont destinés à former un angle à 45°.

Initialement, le dispositif de raccordement 10 est composé d'une pluralité de composants distincts, tel que cela est illustré **en** **figure 2****.**

Au cours d'une première étape, l'élément de verrouillage 42 est inséré transversalement au travers des fentes circonférentielles 44 de retenue. Pour cela, la broche 42 est légèrement inclinée pour permettre l'insertion des pieds 47 dans les fentes circonférentielles 44.

Ensuite, au cours d'une deuxième étape, le joint torique 24 est positionné à l'intérieur du logement 18 du raccord femelle 12 contre l'épaulement 22.

Puis, au cours d'une troisième étape, une position discrète est choisie parmi la pluralité de positions possibles. Cette position discrète est choisie en tenant compte de l'orientation relative désirée entre les deux éléments de conduites fluidiques. Par exemple, **la** **figure 9** illustre deux positions P1 et P2.

L'évidement de réception de codage sert de point de repère visuel pour l'orientation du raccord à bague 20 alors que l'embout 16 du raccord femelle 12 fixe l'orientation du raccord femelle 12.

Ensuite, la bague 20 est insérée autour du raccord femelle 12, dans cet exemple par encliquetage. Lors de cet assemblage en force réalisé par déformation élastique, le ou les ergots 52 du premier organe de positionnement 50 viennent se loger à l'intérieur d'une rainure 54 correspondante du deuxième organe de positionnement 60. Ceci permet l'immobilisation en rotation du raccord femelle 12 et du raccord à bague 20 entre eux grâce aux moyens d'assemblage mutuels 70 (**figures 3** **et** **4**) qui vont par déformation élastique venir bloquer l'ergot 52 dans la rainure 54 sélectionnée. En outre, une fois cet assemblage réalisé, la tubulure mâle 100 est insérée à l'intérieur du dispositif 10. Ainsi, la broche 42 vient se loger à l'intérieur de la gorge annulaire 130 de la tubulure mâle 100. L'élément 42 est agencé pour venir serrer l'embout tubulaire mâle 100 dans la gorge annulaire 130 au travers du raccord à bague 20 (**figure 5**).

Ainsi, grâce à l'invention, il est possible de choisir une orientation relative de la tubulure mâle 100 et de l'embout connecteur 16 lors du montage du dispositif de raccordement 10 et non pas, au moment de la fabrication. Sur **la** **figure 10****,** trois positions discrètes P1, P2 et P3 ont été représentées. Bien entendu, l'invention ne se limite pas aux modes de réalisation précédemment décrits. D'autres modes de réalisation à la portée de l'homme du métier peuvent aussi être envisagés sans sortir du cadre de l'invention définie par les revendications ci-après.

## Revendications

1. Dispositif (10) de raccordement rapide pour transfert de fluide, du type comprenant :
un raccord femelle à douille (12) configuré pour recevoir un embout tubulaire mâle (100),
un raccord à bague de verrouillage (20) configuré pour coopérer avec le raccord femelle et l'embout tubulaire mâle (100) afin d'immobiliser axialement et en rotation relativement l'embout tubulaire mâle (100) et le raccord femelle à douille (12), le raccord à bague (20) et le raccord femelle (12) comprennent respectivement des premier (50) et deuxième (60) organes complémentaires de positionnement relatifs configurés pour définir une pluralité de positions discrètes prédéfinies d'assemblage des deux raccords à bague (20) et à douille (12), réparties angulairement autour de l'axe principal (X) **caractérisé en ce que** le raccord à bague (20) et le raccord femelle (12) comprennent des moyens (70) d'assemblage mutuels configurés pour immobiliser les deux raccords (20, 12) en rotation relativement l'un par rapport à l'autre dans l'une quelconque des positions angulaires discrètes choisie **et en ce que** les moyens d'assemblage mutuels (70) comprennent une partie d'extrémité distale dilatable élastiquement (20B) du raccord à bague (20) apte à être enfilée autour du raccord femelle (12) par dilatation élastique et à venir agripper un épaulement annulaire externe (26) formé par un rétrécissement de section du raccord femelle (12).

2. Dispositif (10) selon la revendication précédente, dans lequel le raccord femelle à douille (12) comprend un corps principal (14) de forme générale annulaire autour d'un axe principal (X) formant la douille (14) et un embout (16) prolongeant la douille (14), de raccordement à un élément de conduite fluidique, l'épaulement externe (26) s'étendant entre la douille (14) et l'embout de raccordement (16).

3. Dispositif (10) selon l'une quelconque des revendications précédentes, dans lequel le raccord femelle (12) comprend un corps principal en forme de douille (14) délimité axialement d'une part par une extrémité libre portant le deuxième organe de positionnement (60) et d'autre part par l'épaulement externe (26), formé à distance de son extrémité libre qui forme l'un des moyens d'assemblage mutuels (70).

4. Dispositif (10) selon l'une quelconque des revendications précédentes, dans lequel l'un des premier (50) et deuxième (60) organes de positionnement comprend au moins un ergot de positionnement (52) et l'autre des premier (50) et deuxième (60) organes de positionnement comprend un relief circonférentiel (53) délimitant une pluralité de rainures (54) de positionnement.

5. Dispositif (10) selon la revendication précédente, dans lequel le relief circonférentiel (53) est porté en bordure d'une extrémité libre du raccord femelle (12).

6. Dispositif (10) selon l'une quelconque des revendications précédentes, dans lequel le premier organe de positionnement (50) s'étend sur une surface interne du raccord à bague (20) et le deuxième organe (60) de positionnement s'étend sur une surface externe du raccord à douille (12), ces deux surfaces étant destinées à venir en regard l'une de l'autre, de telle sorte que le premier organe de positionnement (50) coopère avec le deuxième organe de positionnement (60) par encastrement radial.

7. Dispositif (10) selon l'une quelconque des revendications précédentes, dans lequel les positions discrètes se répartissent autour de l'axe X avec un pas angulaire compris entre 5° et 90°, de préférence compris entre 5° et 40°.

8. Dispositif (10) selon l'une quelconque des revendications précédentes, comprenant au moins cinq positions discrètes, de préférence au moins dix positions discrètes.

9. Dispositif (10) selon l'une quelconque des revendications précédentes, dans lequel les moyens d'assemblage (70) sont du type engageables et libérables, en particulier à clipsage ou encliquetage.

10. Dispositif (10) selon l'une quelconque des revendications précédentes, dans lequel le raccord à bague (20) comprend une jupe (30) fendue munie d'au moins un bourrelet d'encliquetage (34A, 34B) orienté vers l'intérieur de la jupe (30) formant un des moyens d'assemblage mutuels (70).

11. Dispositif (10) selon l'une quelconque des revendications précédentes, l'embout tubulaire mâle (100) étant du type à gorge annulaire (130), le dispositif (10) comprend un élément (42) de verrouillage agencé pour venir serrer l'embout tubulaire mâle (100) dans la gorge annulaire (130) au travers du raccord à bague (20).

12. Dispositif (10) selon la revendication précédente, dans lequel le raccord à bague (20) comprend une partie d'extrémité proximale (20A) munie de lumières symétriques (44) et l'élément de verrouillage (42) présente deux branches (46) de verrouillage élastique réunies entre elles par une tête de préhension (48) et adaptées pour être enfoncées transversalement et réversiblement à travers les deux lumières symétriques (44).

13. Dispositif selon l'une quelconque des revendications précédentes, dans lequel le raccord femelle (12) comprend un corps principal d'axe principal (X) formant la douille (14) prolongé par un embout (16) d'axe de prolongement (X1) qui forment ensemble un angle compris entre 5° et 90°.

14. Dispositif (10) selon l'une quelconque des revendications précédentes, dans lequel le raccord à bague (20) présente sur sa surface interne au moins un évidement (70) encastré radialement vers l'extérieur propre à coopérer avec au moins un repère d'indexation ou de codage (110, 120) formé en périphérie extérieure de l'embout tubulaire mâle (100) pour permettre l'immobilisation en rotation du raccord à bague (20) et de l'embout tubulaire mâle (100).

15. Dispositif (10) selon l'une quelconque des revendications précédentes, dans lequel le raccord femelle (12) comprend sur sa surface interne un rétrécissement de section interne formant un épaulement configuré pour délimiter avec le raccord à bague (20), l'embout tubulaire mâle (100) et la surface interne un logement de réception d'un joint torique (24).
